(19) Europäisches Patentamt
European Patent Office
Office européen des brevets

(11) Veröffentlichungsnummer: **0 274 458 B1**

# (12) EUROPÄISCHE PATENTSCHRIFT

(45) Veröffentlichungstag der Patentschrift: **19.09.90**

(51) Int. Cl.⁵: **C09B 1/467**, C09B 62/06, D06P 1/24

(21) Anmeldenummer: **88810002.1**

(22) Anmeldetag: **05.01.88**

(54) **Anthrachinonküpenfarbstoffe, deren Herstellung und Verwendung.**

(30) Priorität: **09.01.87 CH 66/87**

(43) Veröffentlichungstag der Anmeldung: **13.07.88 Patentblatt 88/28**

(45) Bekanntmachung des Hinweises auf die Patenterteilung: **19.09.90 Patentblatt 90/38**

(84) Benannte Vertragsstaaten: **CH DE FR GB IT LI**

(56) Entgegenhaltungen:
**CH-A- 435 511**
**CH-A- 449 154**
**FR-A- 1 314 681**
**GB-A- 2 023 160**

(73) Patentinhaber: **CIBA-GEIGY AG, Klybeckstrasse 141, CH-4002 Basel(CH)**

(72) Erfinder: **Altermatt, Hans, Dr., Schönenbachstrasse 22, CH-4153 Reinach(CH)**

**EP 0 274 458 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Anthrachinonküpenfarbstoffe, die mindestens eine Thiophen-2-carbonsäureamidgruppe aufweisen, Verfahren zu ihrer Herstellung und ihre Verwendung zum Färben oder Bedrucken von Textilfasern.

In der CH-A 449 154 sind Küpenfarbstoffe beschrieben, welche mindestens zwei verküpbare Anthrachinonreste und mindestens eine Sulfonsäuregruppe aufweisen, wobei die Anthrachinonreste über einen Triazin- oder einen Rest einer aromatischen Dicarbonsäure verbunden sein können. Ferner ist aus CH-A 435 511, Beispiel 7 ein Dianthrachinonyloxdiazolfarbstoff bekannt, der eine Thiophen-2-carbonsäureamidgruppe enthält.

Die erfindungsgemässen Anthrachinonküpenfarbstoffe entsprechen der allgemeinen Formel

(1) 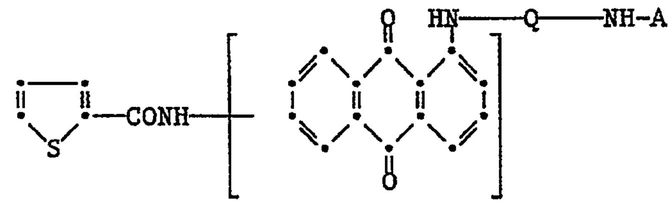

in der A einen verküpbaren Rest und
Q einen 1,3,5-Triazinylrest oder den Rest einer aromatischen, carbocyclischen oder heterocyclischen Dicarbonsäure bedeuten. Die Thiophen-2-carbonsäureamidgruppe befindet sich vorzugsweise in 4- oder 5-Stellung des Anthrachinonylrestes.

Der verküpbare Rest A leitet sich zweckmässigerweise von polycyclischen chinoiden Verbindungen mit vorzugsweise 3 bis 6 ankondensierten Ringen ab, wie z.B. Anthrachinone, Phthaloylacridone, Anthrone, Benzanthrone, Anthanthrone, Anthrimide, Anthrapyridine, Anthrapyrimidine, Anthrapyridone, Anthrapyrimidone, Azabenzanthrone, Isothiazolanthrone oder Pyrazolanthrone. Dabei sind die Anthrachinone und Phthalolyacridone bevorzugt.

All obige verküpbare Reste können die üblichen Substituenten enthalten. Solche Substituenten sind beispielsweise Halogen, Trifluormethyl, Niederalkyl, Niederalkoxy, Niederalkylthio, Niederalkylcarbonyl, Niederalkoxycarbonyl, Amino, Mononiederalkylamino, Diniederalkylamino, Acylamino, Phenyl, Phenylamino, Phenyloxy oder Phenylthio.

In erster Linie stellt der Rest A einen in 2-Stellung gebundenen 3,4-Phthaloylacridonylrest oder vor allem einen in 1- oder 2-Stellung gebundenen Anthrachinonylrest, der Substituenten der obengenannten Art enthalten kann, dar.

Als Rest einer aromatischen carbocyclischen Dicarbonsäure leitet sich Q vorzugsweise von einer mono- oder dicyclischen aromatischen Dicarbonsäure mit 8 bis 16 Kohlenstoffatomen, besonders einer Benzoldicarbonsäure, wie Phthalsäure, Isophthalsäure oder Terephthalsäure oder einer Diphenylalkandicarbonsäure, wie Diphenylmethan-3,3'-dicarbonsäure, einer Diphenylsulfid-dicarbonsäure, einer Diphenylsulfon-dicarbonsäure, einer Diphenylketo-dicarbonsäure, einer Diphenylazo-dicarbonsäure oder auch von Naphthalindicarbonsäuren ab. Die carbocyclischen Reste sind vorzugsweise unsubstituiert oder können durch Hydroxy, Halogen, Cyano, Nitro, Niederalkyl, Niederalkoxy, Niederalkylthio, Phenyl oder Aminogruppen substituiert sein.

Als Rest einer heterocyclischen Dicarbonsäure leitet sich Q vorzugsweise von der Dicarbonsäure eines fünf- oder sechsgliedrigen Heterocyklus aromatischen Charakters ab, wie z.B. Furan, Thiophen, Pyrrol, Pyridin, Pyrazin oder Pyrimidin, wobei diese Heterocyclen unsubstituiert oder durch Halogen, Cyano, Hydroxy, Niederalkyl, Niederalkoxy, Niederalkylthio, Phenyl, Phenoxy oder Phenylthio substituiert sein können.

Vorzugsweise stellt Q einen unsubstituierten oder vorzugsweise substituierten 1,3,5-Triazinrest dar, wobei als Substituenten die obengenannten Gruppen und vor allem Halogen, Niederalkyl, Niederalkoxy, Niederalkylthio, Aryl, wie z.B. Phenyl oder Biphenylyl, Aryloxy, wie z.B. Phenoxy, Pyridyl, Amino, Niederalkylamino, Diniederalkylamino, Hydroxy-Niederalkylamino, Di-(hydroxyniederalkyl)amino oder Arylamino, wie z.B. Phenylamino in Betracht kommen.

Niederalkyl, Niederalkylthio und Niederalkoxy stellen in der Regel solche Gruppen oder Gruppenbestandteile dar, die 1 bis 5, insbesondere 1 bis 3 Kohlenstoffatome aufweisen. Beispiele für derartige Gruppen sind Methyl, Ethyl, n-Propyl, Isopropyl, n-Butyl, sek.Butyl, tert.Butyl, Amyl oder Isoamyl bzw. Methoxy, Ethoxy, Isopropoxy, Isobutoxy, tert.Butoxy oder tert.Amyloxy bzw. Methylthio, Ethylthio, Propylthio oder Butylthio.

"Acyl" ist besonders Formyl, Niederalkylcarbonyl, wie z.B. Acetyl oder Propionyl, oder vor allem Benzoyl. Weitere Acylbestandteile können Niederalkylsulfonyl, wie z.B. Methylsulfonyl oder Ethylsulfonyl sowie Phenylsulfonyl sein. Benzoyl und Phenylsulfonyl können durch Halogen, Methyl, Phenyl, Methoxy oder Ethoxy substituiert sein.

Halogen bedeutet beispielsweise Fluor, Brom oder vorzugsweise Chlor.

Praktisch wichtige, erfindungsgemässe Anthrachinonküpenfarbstoffe entsprechen der Formel

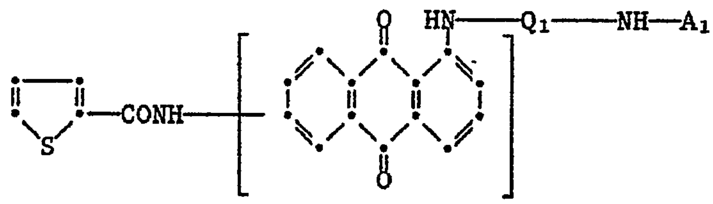

(2)

worin

$A_1$ einen in 2-Stellung gebundenen 3,4-Phthaloylacridonylrest oder einen gegebenenfalls substituierten, in 1- oder 2-Stellung gebundenen Anthrachinonylrest

und

$Q_1$ den Rest einer Benzol-, Thiophen- oder Pyridindicarbonsäure oder einen 1,3,5-Triazinrest, der unsubstituiert oder durch Halogen, Niederalkyl, Niederalkoxy, Niederalkylthio, Aryl, Aryloxy, Pyridyl, Amino, Niederalkylamino, Diniederalkylamino, Hydroxyniederalkylamino, Di-(hydroxyniederalkyl)-amino oder Arylamino substituiert ist,

bedeuten.

Unter den Anthrachinonküpenfarbstoffen der Formel (2) sind von besonderer Bedeutung solche, worin $Q_1$ einen unsubstituierten oder durch Halogen, besonders Chlor, Niederalkyl, Niederalkylthio, Diniederalkylamino, Di-(hydroxyniederalkyl)-amino, Phenyl, Phenylamino oder Pyridyl substituierten 1,3,5-Triazinrest und

$A_1$ einen 1-Anthrachinonylrest, der eine Thiophen-2-carbonsäureamidgruppe aufweist,

bedeuten.

Die Anthrachinonküpenfarbstoffe der Formel (1) werden hergestellt, indem man

(A) eine gegebenenfalls ringsubstituierte 2,4-Diamino-1,3,5-triazinverbindung oder ein Dicarbonsäurediamid der Formel

(3)$Q'(-CONH_2)_2$

mit einer 1-Halogenanthrachinonverbindung, welche eine Thiophen-2-carbonsäureamidgruppe enthält, und einer verküpbaren Halogenverbindung der Formel (4) A-Hal umsetzt, oder dass man

(B) eine gegebenenfalls ringsubstituierte 2,4-Dihalogen-1,3,5-triazinverbindung oder ein Dicarbonsäuredihalogenid der Formel

(5)$Q'(-COHal)_2$

mit einer 1-Aminoanthrachinonverbindung, welche eine Thiophen-2-carbonsäureamidgruppe enthält, und einer verküpbaren Aminoverbindung der Formel

(6)$A-NH_2$

kondensiert.

In diesen Formeln (3) bis (6) bedeuten

Q' einen zweiwertigen aromatischen, carbocyclischen oder heterocyclischen Rest,

Hal Halogen, wie z.B. Fluor oder vorzugsweise Brom oder Chlor und

A einen verküpbaren Rest.

Sowohl die Umsetzungen (A) als auch die Kondensationen (B) können gleichzeitig oder vorzugsweise nacheinander durchgeführt werden.

Die dabei als Ausgangsstoffe zu verwendenden Amino- und Halogentriazinverbindungen sind bekannt.

Die wichtigsten als Ausgangsstoffe in Betracht kommenden Triazinverbindungen sind:

2,4-Diamino-1,3,5-triazin (Formoguanamin),
2,4-Diamino-6-methylthio-1,3,5-triazin,
2,4-Diamino-6-ethylthio-1,3,5-triazin,
2,4-Diamino-6-methyl-1,3,5-triazin (Acetoguanamin),
2,4-Diamino-6-phenyl-1,3,5-triazin (Benzoguanamin),
2,4-Diamino-6-pyridyl-(3') oder -(4')-1,3,5-triazin,
2,4-Dichlor-6-methylthio-1,3,5-triazin,
Cyanurchlorid, Cyanurbromid und Cyanurfluorid,
2,4-Dichlor-6-phenyl-1,3,5-triazin,
2,4-Dichlor-6-phenoxy-1,3,5-triazin.

Die als Ausgangsstoffe benötigten und eine Thiophencarbonsäureamidgruppe aufweisenden Anthrachinonverbindungen können durch Acylierung einer Amino-1-halogen-anthrachinonverbindung mit einem Thiophencarbonsäurehalogenid, vorzugsweise -chlorid oder durch Umsetzen eines Thiophen-2-carbonsäureamids mit einer Halogen-1-amino-anthrachinonverbindung erhalten werden.

Bevorzugte derartige Anthrachinonverbindungen sind

1-Amino-4-(thiophen-(2')-carbonylamino)anthrachinon,
1-Amino-5-(thiophen-(2')-carbonylamino)anthrachinon,

1-Chlor-4-(thiophen-(2')-carbonylamino)anthrachinon,
1-Chlor-5-(thiophen-(2')-carbonylamino)anthrachinon.

Als verküpbare Verbindungen der Formel A-Hal kommen insbesondere solche Verbindungen in Frage, worin die Halogenatome Hal Chlor oder Brom sind. Als geeignete verküpbare Verbindungen A-Hal und A-$NH_2$ sind die obigen Anthrachinonverbindungen mit einer Thiophen-2-carbonsäureamidgruppe zu nennen und noch folgende Amine und Halogenverbindungen:

1-Aminoanthrachinon,
1-Amino-4-methoxyanthrachinon,
1-Amino-4-acetylaminoanthrachinon,
1-Amino-4-benzoylamino-anthrachinon,
1-Amino-4-(p-toluolsulfonylamino)-anthrachinon,
1-Amino-4-(p-chlorbenzoylamino)-anthrachinon,
1-Amino-4-anilino-anthrachinon,
1-Amino-4-[p-(N,N-dimethylsulfamido)-benzoylamino]-anthrachinon,
1-Amino-4-phenylthio-anthrachinon,
1-Amino-4-(4'-phenyl-benzoylamino)-anthrachinon,
1-Amino-4-chloranthrachinon

sowie die entsprechenden 1-Aminoanthrachinone, die statt in 4-Stellung in 5- oder 8-Stellung substituiert sind.

2-Amino-anthrachinon,
1-Amino-2-methyl-anthrachinon,
1-Amino-3-chlor-anthrachinon,
1-Amino-6,7-dichlor-anthrachinon,
1-Amino-6-phenylthio-anthrachinon,
1-Amino-7-phenylthio-anthrachinon,
1-Amino-6-chlor-7-phenylthio-anthrachinon,
1-Amino-7-chlor-6-phenylthio-anthrachinon,
1,4-Diamino-2-acetyl-anthrachinon,
2-Amino-3-chlor-anthrachinon,
2-Amino-4-chlor-anthrachinon,
1-Amino-2-chlor-anthrachinon,
1-Amino-6-chlor-anthrachinon,
1-Amino-3-chlor-6-methyl-anthrachinon,
1-Amino-2-methyl-3-chlor-anthrachinon,
1-Amino-7-chlor-anthrachinon,
2-Amino-3,4-phthaloylacridon,
2-Amino-6- oder -7-chlor-3,4-phthaloylacridon,
2-Amino-5,7-dichlor-3,4-phthaloylacridon,
2-Amino-1,7-dichlor-3,4-phthaloylacridon,
Aminoisothiazolanthron,
1-Chloranthrachinon,
1,3-Dichloranthrachinon,
1,5-Dichloranthrachinon,
1,6-Dichloranthrachinon,
1,8-Dichloranthrachinon,
1-Bromanthrachinon,
1,5-Dibromanthrachinon,
1,8-Dibromanthrachinon,
2-Chloranthrachinon,
2,6-Dichloranthrachinon,
2,7-Dichloranthrachinon,
2-Bromanthrachinon,
2,6-Dibromanthrachinon,
2,7-Dibromanthrachinon,
1-Chlor-5-acetylaminoanthrachinon,
1-Chlor-4-benzoylaminoanthrachinon,
1-Chlor-4-(p-chlorbenzoylamino)-anthrachinon,
1-Brom-4-benzoylaminoanthrachinon,
1-Brom-4-(4'-phenylbenzoylamino)-anthrachinon,
1-Chlor-5-benzoylaminoanthrachinon,
1-Chlor-5-(p-chlorbenzoylamino)-anthrachinon,
1-Brom-5-benzoylaminoanthrachinon,
1-Chlor-2-methylaminoanthrachinon,
1-Chlor-4-methylanthrachinon,
1-Chlor-4-methoxyanthrachinon,

1-Brom-2-methoxyanthrachinon,
1-Brom-4-methoxyanthrachinon,
1-Chlor-3-acetyl-4-amino-anthrachinon,
1-Chlor-4-anilino-anthrachinon,
1-Chlor-4-phenylthio-anthrachinon,
1-Chlor-5-phenylthio-anthrachinon,
2-Chlor-3,4-phthaloylacridon,
2,5,7-Trichlor-3,4-phthaloylacridon.

Die erfindungsgemässen Anthrachinonküpenfarbstoffe können auch dadurch hergestellt werden, dass man die Thiophen-2-carbonsäureamidgruppe nachträglich in den verküpbaren Farbstoff einführt. Dies erfolgt, indem man die verküpbare Anthrachinonverbindung, die eine freie kondensierbare Aminogruppe enthält, mit einem Thiophen-2-carbonsäurehalogenid acyliert oder indem man die verküpbare Anthrachinonverbindung, die ein reaktives Halogenatom enthält, mit Thiophen-2-carbonsäureamid umsetzt.

Die Umsetzungen der 2,4-Diamino-s-triazinverbindungen oder der Dicarbonsäurediamide der Formel (3) mit den Halogenanthrachinonverbindungen und den verküpbaren Halogenverbindungen der Formel (4) erfolgen zweckmässig in Anwesenheit eines säurebindenden Mittels, wie z.B. eines Alkalimetallhydroxides, Alkalimetallcarbonates oder einer tertiären Stickstoffbase, wie z.B. Pyridin oder Trialkylaminen und in Gegenwart einer Kupferverbindung als Katalysator, wie z.B. Kupferchlorid, Kupfer(I)bromid, Kupfer(I)iodid oder vor allem einer Additionsverbindung dieses Metalljodides und einer tertiären Stickstoffbase, wie z.B. Triethylamin, N-Methylpiperidin oder besonders Pyridin. Bevorzugter Katalysator ist der Cu-Jodid-Pyridinkomplex, wie er in der DE-C-1'795'102 beschrieben ist.

Geht man von den 2,4-Dihalogen-1,3,5-triazinverbindungen oder den Dicarbonsäuredihalogeniden der Formel (5) aus, so kann die Umsetzung mit der Aminoanthrachinonverbindung und der verküpbaren Aminoverbindung der Formel (6) ebenfalls in ein- oder zweistufiger Reaktion ausgeführt werden.

Die Reaktionen finden vorzugsweise in einem inerten hochsiedenden organischen Lösungsmittel, beispielsweise zwischen 110 bis 230°C statt.

Als Lösungsmittel eignen sich insbesondere Nitrobenzol oder Chlorbenzole, wie Dichlorbenzol oder Trichlorbenzol, Nitrobenzol ist bevorzugt.

Bedeutet Q in den erfindungsgemässen Anthrachinonküpenfarbstoffen einen 1,3,5-Triazinrest, der in 6-Stellung z.B. durch eine Mercaptogruppe oder eine Aminogruppe substituiert ist, so können diese Anthrachinonderivate auch hergestellt werden, indem man eine Halogentriazinverbindung der Formel

(7) 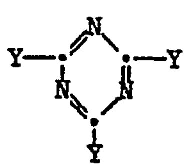

worin alle drei Y Halogenatome sind, mit einer 1-Aminoanthrachinonthiophencarbonsäureamidverbindung, mit einer verküpbaren Aminoverbindung der Formel (6) und mit einer entsprechenden Mercaptanverbindung oder Aminoverbindung kondensiert. Dabei können die Teilreaktionen in beliebiger Reihenfolge ausgeführt werden. Anstelle des Mercaptans kann auch das entsprechende Alkalimercaptid verwendet werden.

Die erfindungsgemässen Produkte eignen sich zum Färben oder Bedrucken der verschiedensten Materialien, insbesondere zum Färben oder Bedrucken von Fasern aus natürlicher oder regenerierter Cellulose in Gegenwart von Reduktionsmitteln, wie z.B. Dithionit.

Die erhaltenen Färbungen zeichnen sich durch hervorragende Egalitäten aus. Die Echtheiten sind allgemein sehr gut, insbesondere die Licht-, Wasser-, Chlor- und Sodakochechtheiten. Die neuen Farbstoffe reservieren Polyesterfasern gut oder schmutzen sie Ton in Ton an, was sie zum Färben von Mischfasern im Gemisch mit Dispersionsfarbstoffen geeignet macht.

Die neuen Produkte können auch als Pigmente verwendet werden. Dank ihrer günstigen Eigenschaften können sie für die verschiedensten Pigmentapplikationen eingesetzt werden, z.B. in feinverteilter Form zum Färben von Kunstseide, Viscose oder Celluloseethern oder -estern oder von Superpolyamiden bzw. Superpolyurethanen oder Polyestern in der Spinnmasse, sowie zur Herstellung von gefärbten Lacken oder Lackbildnern, Lösungen oder Produkten aus Acetylcellulose. Nitrocellulose, natürlichen Harzen oder Kunstharzen, wie Polymerisationsharzen oder Kondensationsharzen, z.B. Aminoplasten, Alkydharzen, Phenoplasten, Polyolefinen, wie Polystyrol, Polyvinylchlorid, Polyethylen, Polypropylen, Polyacrylnitril, Gummi, Casein, Silikon oder Silikonharzen.

In den folgenden Beispielen bedeuten die Teile, sofern nichts anderes angegeben ist, Gewichtsteile, die Prozente Gewichtsprozente.

Beispiel 1:

17 g Terephthalsäure werden in 650 ml Nitrobenzol mit 18 ml Thionylchlorid in Gegenwart von 0,5 ml Pyridin während einer Stunde bei 120°C verrührt. Nach dem Austreiben des überschüssigen Thionylchlorides werden 73 g 1-Amino-4-(thiophen-(2')-carbonylamino)anthrachinon zugegeben und 5 Stunden bei 150°C verrührt. Nach Abkühlen auf 70°C wird der Niederschlag abfiltriert und mit Nitrobenzol und Methanol gewaschen. Nach dem Trocknen erhält man 70 g eines roten Farbstoffes der Formel

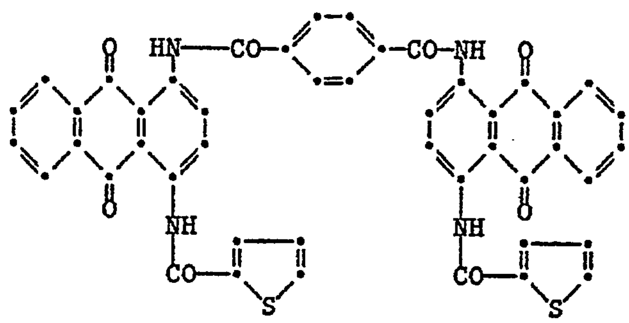

(11)

Dieser Farbstoff färbt Baumwolle aus der Küpe in echten, rotorangen Tönen an.

Wird in Beispiel 1 die Terephthalsäure durch

17 g Isophthalsäure
24,5 g 5-Phenylisophthalsäure
17,5 g 2,5-Thiophendicarbonsäure
17 g 2,5-Pyridincarbonsäure
26 g 3,3'-Diphenylmethandicarbonsäure
27,5 g 2,2'-Diphenylsulfiddicarbonsäure
30,5 g Thianthrendicarbonsäure

oder 42,5 g Azobiphenylyl-4,4'-dicarbonsäure ersetzt und verfährt wie im Beispiel beschrieben, so erhält man weitere Farbstoffe, die Baumwolle aus der Küpe in echten orange-roten Tönen mit sehr guten Nass- und Lichtechtheit färben.

Die verwendete 1-Amino-4-thiophen-(2')-carbonylaminoanthrachinonverbindung wird durch Monoacylierung von 1,4-Diaminoanthrachinon mit Thiophen-2-carbonsäurechlorid in Nitrobenzol bei 150°C erhalten.

Beispiel 2:

Zu einer Lösung von 1 g Kupfer(I)-iodid und 7,5 ml Pyridin in 600 ml Nitrobenzol werden 11,1 g Formoguanamin, 78 g 1-Chlor-4-(thiophen-(2')-carbonylamino)anthranchinon und 25 g Natriumcarbonat eingetragen. Die Suspension wird während 6 Stunden bei 180°C verrührt und nach Abkühlen auf 70°C abfiltiert. Der Rückstand wird zuerst mit Nitrobenzol dann mit Methanol und Wasser gewaschen und anschliessend mit 5 %iger Salpetersäure zur Entfernung des Kupfers ausgekocht. Nach dem Trocknen erhält man 67,5 g eines roten Farbstoffes der Formel

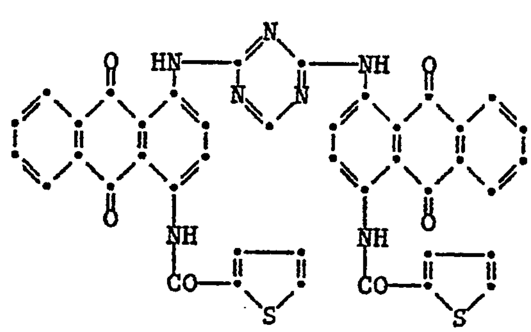

(12)

Dieser Farbstoff färbt Baumwolle nach der Küpenmethode in roten Tönen an.

Wird in Beispiel 2 Formoguanamin durch

12,5 g Acetoguanamin,
18,7 g Benzoguanamin,
18,8 g 2,4-Diamino-6-pyridyl-(4')-1,3,5-triazin oder

18,8 g 2,4-Diamino-6-pyridyl-(3')-1,3,5-triazin ersetzt und verfährt wie im Beispiel beschrieben, so erhält man weitere Küpenfarbstoffe, die Baumwolle in roten, echten Tönen färben.

Die verwendete 1-Chlor-4-(thiophen-(2')-carbonylamino)-anthrachinonverbindung wird durch Acylierung von 1-Chlor-4-amino-anthrachinon mit Thiophen-2-carbonsäurechlorid in Nitrobenzol bei 150°C erhalten.

Beispiel 3:

19,6 g 2,4-Dichlor-6-methylthio-1,3,5-triazin und 73 g 1-Amino-4-(thiophen-(2')-carbonylamino)anthrachinon werden in 600 ml Nitrobenzol während 6 Stunden bei 150°C verrührt, worauf ein Niederschlag erhalten wird. Letzterer wird bei 60°C abfiltriert und mit Nitrobenzol und Methanol gewaschen. Nach dem Trocknen erhält man 72 g eines roten Farbstoffes der Formel

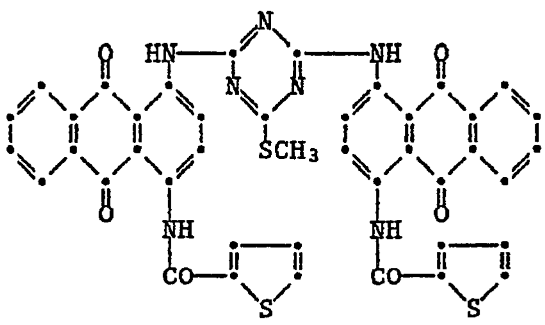

(13)

Dieser Farbstoff färbt Baumwolle nach der Küpenmethode in roten, echten Tönen an.

Beispiel 4:

Zu einer Lösung von 1 g Kupfer-(I)-iodid und 7,5 ml Pyridin in 600 ml Nitrobenzol werden 78 g 1-Chlor-5-(thiophen-(2')-carbonylamino)anthrachinon, 18,8 g 2,4-Diamino-6-pyridyl-(4')-1,3,5-triazin und 25 g Natriumcarbonat eingetragen, worauf die Mischung auf 180°C erwärmt und nach 6 Stunden auf 70°C abgekühlt wird. Hierauf wird der Niederschlag abfiltriert, in der Reihenfolge mit Nitrobenzol, Methanol und Wasser gewaschen und anschliessend mit 5 %iger Salpetersäure ausgekocht. Man erhält 68,5 g eines Farbstoffes der Formel

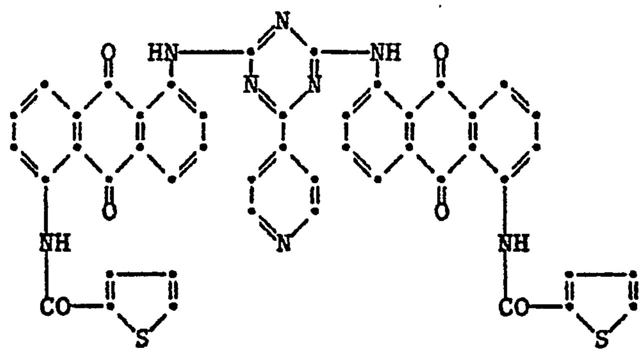

(14)

Dieser Farbstoff färbt Baumwolle aus der Küpe in gelben Tönen an.

Die verwendete 1-Chlor-5-(thiophen-(2')-carbonylamino)anthrachinonverbindung wird durch Acylierung von 1-Chlor-5-amino-anthrachinon mit Thiophen-2-carbonsäurechlorid in Nitrobenzol bei 150°C erhalten.

Beispiel 5:

17,2 g Thiophen-2,5-dicarbonsäure werden in 650 ml Nitrobenzol mit 18 ml Thionylchlorid in Gegenwart von 0,5 ml Pyridin während einer Stunde bei 120°C verrührt. Alsdann werden 73 g 1-Amino-5-(thiophen-(2')-carbonylamino)anthrachinon zugegeben und 5 Stunden bei 150°C verrührt. Man kühlt danach auf 70°C ab, filtriert und wäscht den Rückstand mit Nitrobenzol und Methanol. Nach dem Trocknen des Produktes erhält man 79 g eines gelben Farbstoffes der Formel

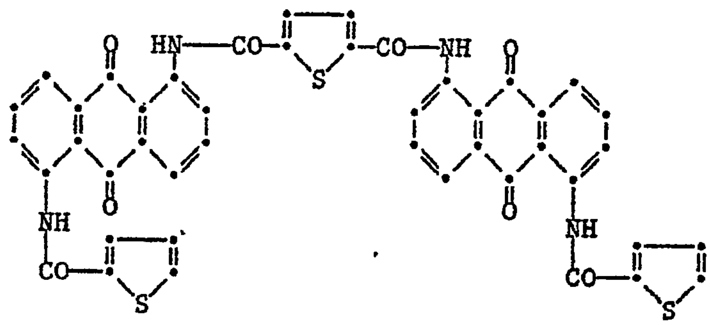

(15)

Dieser Farbstoff färbt Baumwolle nach der Küpenmethode in gelben Tönen an.

Die verwendete 1-Amino-5-(thiophen-(2')-carbonylamino)anthrachinonverbindung wird durch Acylierung von 1-Amino-5-nitroanthrachinon mit Thiophen-2-carbonsäurechlorid in Nitrobenzol bei 150°C und anschliessende übliche Reduktion der Nitrogruppe erhalten.

Beispiel 6:

18,5 g Cyanurchlorid werden in 550 ml Nitrobenzol gelöst. Nach Zugabe von 34 g 2-Amino-3,4-phthaloylacridon und 25 ml Diethylanilin wird unter Durchleiten von Stickstoff 5 Stunden bei 100-105°C verrührt. Alsdann werden 36,5 g 1-Amino-5-(thiophen-(2')-carbonylamino)anthrachinon zugegeben, worauf die ganze Mischung noch während 8 Stunden bei 150°C verrührt wird. Nach Abkühlen wird abfiltriert und mit Nitrobenzol und Methanol gewaschen. Man erhält 72 g eines oliven Farbstoffes der Formel

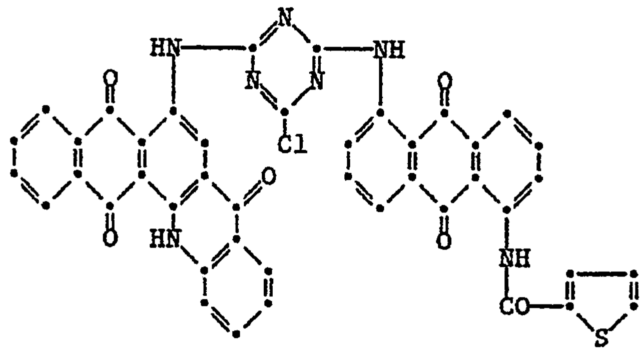

(16)

Dieser Farbstoff färbt Baumwolle nach der Küpenmethode in oliven Tönen an.

Beispiel 7:

Wird in Beispiel 3 das 2,4-Dichlor-6-methylthiotriazin durch 18,5 g Cyanurchlorid ersetzt und man verfährt wie im Beispiel beschrieben, so werden 71 g eines roten Farbstoffes der Formel

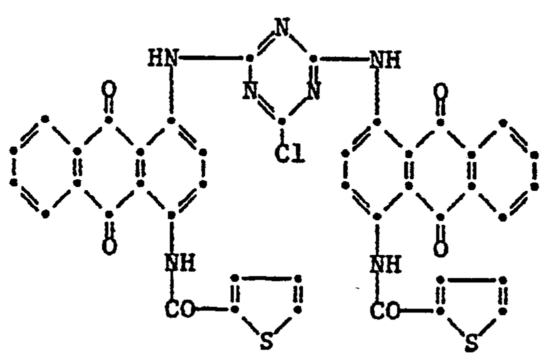

(17)

erhalten. Dieser Farbstoff färbt Baumwolle nach der Küpenmethode ebenfalls in roten Tönen.

Beispiel 8:

8,1 g des gemäss Beispiel 7 hergestellten Farbstoffes der Formel (17) werden in 60,0 ml Nitrobenzol und 3,5 ml Anilin während 5 Stunden bei 185-190°C verrührt. Nach dem Abkühlen wird der Niederschlag abfiltriert und mit Nitrobenzol und Ethanol gewaschen. Man erhält nach dem Trocknen 7,5 g eines roten Farbstoffes der Formel

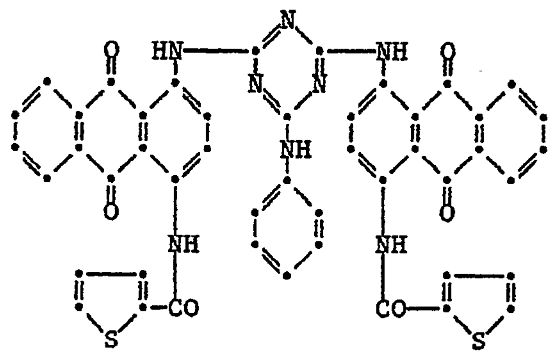

(18)

Dieser Farbstoff färbt Baumwolle aus der Küpe in blaustichig roten Tönen.

Beispiel 9:

Wird in Beispiel 8 das Anilin durch 3,5 ml Diethanolamin ersetzt, so werden 7,0 g eines Farbstoffes der Formel

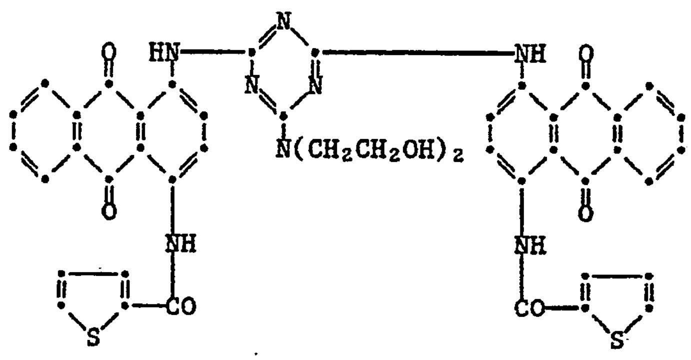

(19)

erhalten.

Dieser Farbstoff färbt Baumwolle aus der Küpe in blaustichig roten Tönen.

Beispiel 10:

24 g 1,5-Diaminoanthrachinon und 11,5 g 2,4-Dichlor-6-phenyl-1,3,5-triazin werden in 300 ml Nitrobenzol 6 Stunden bei 150°C verrührt. Hierauf wird das Reaktionsprodukt auf 100°C abgekühlt und mit 17,5 g Thiophen-2-carbonsäurechlorid versetzt. Alsdann rührt man unter Ueberleiten von Stickstoff während 2 Stunden bei 150°C und 3 Stunden bei 175°C. Nach dem Erkalten wird der Niederschlag abfiltriert und mit Nitrobenzol und Ethanol gewaschen. Man erhält 37 g eines gelben Farbstoffes der Formel

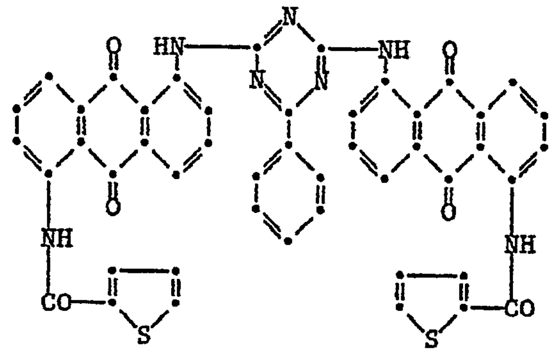

(20)

Dieser Farbstoff färbt Baumwolle aus der Küpe in goldgelben Tönen mit guten Echtheiten.

Färbevorschriften

I. 1 g des Farbstoffes der Formel (13) wird mit 10 ml einer Natriumhydroxidlösung von 36° Bé und 5 g Natriumdithionit in 200 g Wasser bei 50 bis 70°C verküpt. Einem Färbebad, das in 2000 g Wasser 5 ml der Natriumhydroxidlösung und 3,7 g Natriumdithionit erhält, gibt man die obige Stammküpe zu und geht bei 40°C mit 100 g Baumwolle ein. Nach 10 Minuten gibt man 15 g Natriumchlorid zu, nach 20 Minuten weitere 15 g und färbt bei 40°C während 45 Minuten. Hierauf wird die Baumwolle abgequetscht, oxidiert und wie üblich fertiggestellt. Man erhält eine echte rote Färbung.

II. 1 Teil des gemäss Beispiel 2 erhaltenen Farbstoffs der Formel (12) und 0,5 g CI Dispersionsrot 82 werden mit 2,5 g einer 50 %igen wässrigen Lösung des Natriumsalzes der Dinaphthylmethandisulfonsäure nass vermahlen. Mit diesem Farbstoffpräparat, 2 g Ammoniumsulfat und 1000 g Wasser stellt man eine Flotte her und stellt den pH-Wert mit Hilfe von Mononatriumphosphat auf 6,0 bis 6,9 ein.

In dieses Bad geht man mit 100 g eines Mischgewebes aus Baumwolle und Polyester (67 % PE) ein und erwärmt innert 45 Minuten auf 120 bis 125°C. Man färbt 60 Minuten in geschlossenem Gefäss bei dieser Temperatur, lässt auf 60 bis 70°C abkühlen und gibt 20 ml wässriger Natriumhydroxidlösung (36° Bé) und 5 g Natriumdithionit zu.

Nach 45 Minuten wird das Gewebe abgequetcht, oxidiert und wie üblich fertiggestellt. Man erhält ein rot gefärbtes Mischgewebe.

Pigmentfärbung

5 g des gemäss Beispiel 2 hergestellten Farbstoffes der Formel (12) werden mit 95 g Dioctylphthalat vermischt und in einer Kugelmühle solange vermahlen, bis die Farbstoffteilchen kleiner als 3 µ sind.

0,8 g dieser Dioctylphthalatpaste werden mit 13 g Polyvinylchlorid, 7 g Dioctylphthalat und 0,1 g Cadmiumstearat vermischt und hierauf 5 Minuten auf dem Zweiwalzenstuhl bei 140°C ausgewalzt. Man erhält ein rot gefärbtes Material mit guten Migrationseigenschaften und guter Lichtechtheit.

Lackfärbung

10 g Titandioxid und 2 g des Farbstoffes der Formel (12) werden mit einer Mischung von 26,4 g Kokosalkydharz, 24,0 g Melamin-Formaldehydharz (50 % Festkörpergehalt), 8,8 g Ethylenglykolmonomethylether und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120°C eingebrannt, dann erhält man eine klare rote Lackierung, die sich bei guter Farbstärke durch eine gute Ueberlackierechtheit, eine hervorragende Lichtechtheit und gute Wetterechtheit auszeichnet.

## Patentansprüche

1. Anthrachinonküpenfarbstoffe der Formel

(1) 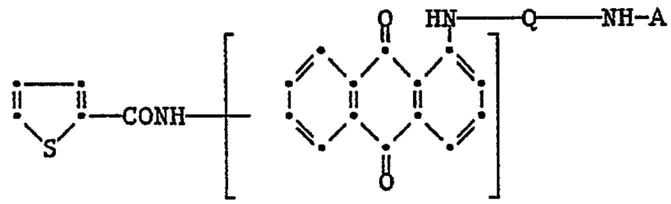

in der
A einen verküpbaren Rest und
Q einen 1,3,5-Triazinylrest oder den Rest einer aromatischen, carbocyclischen oder heterocyclischen Dicarbonsäure bedeuten.

2. Anthrachinonküpenfarbstoffe gemäss Anspruch 1, dadurch gekennzeichnet, dass sich die Thiophen-2-carbonsäureamidgruppe in Formel (1) in 4- oder 5-Stellung des Anthrachinonylrestes befindet.

3. Anthrachinonküpenfarbstoffe gemäss einem der Ansprüche 1 und 2, dadurch gekennzeichnet, dass sich der verküpbare Rest A in Formel (1) von einer polycyclischen chinoiden Verbindung ableitet.

4. Anthrachinonküpenfarbstoffe gemäss einem der Ansprüche 1 bis 3, dadurch gekennzeichnet, dass in Formel (1) der Rest A einen in 2-Stellung gebundenen 3,4-Phthaloylacridonylrest oder einen in 1- oder 2-Stellung gebundenen Anthrachinonylrest bedeutet.

5. Anthrachinonküpenfarbstoffe gemäss einem der Ansprüche 1 bis 4, dadurch gekennzeichnet, dass in Formel (1) Q den zweiwertigen Rest einer mono- oder dicyclischen aromatischen Dicarbonsäure mit 8 bis 16 Kohlenstoffatomen darstellt.

6. Anthrachinonküpenfarbstoffe gemäss einem der Ansprüche 1 bis 4, dadurch gekennzeichnet, dass in Formel (1) Q den zweiwertigen Rest einer Dicarbonsäure eines fünf- oder sechsgliedrigen Heterocyklus aromatischen Charakters darstellt.

7. Anthrachinonküpenfarbstoffe gemäss einem der Ansprüche 1 bis 4, dadurch gekennzeichnet, dass in Formel (1) Q einen zweiwertigen unsubstituierten oder durch Halogen, Niederalkyl, Niederalkoxy, Niederalkylthio, Aryl, Aryloxy, Pyridyl, Amino, Niederalkylamino, Diniederalkylamino, Hydroxyniederalkylamino, Di-(hydroxyniederalkyl)amino oder Arylamino substituierten 1,3,5-Triazinrest darstellt, wobei der Ausdruck "Nieder" sich auf solche Gruppen mit 1 bis 5 Kohlenstoffatomen bezieht.

8. Anthrachinonküpenfarbstoffe gemäss Anspruch 1, dadurch gekennzeichnet, dass sie der Formel

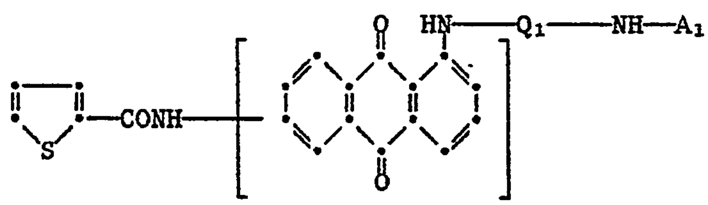 (2)

entsprechen, worin
$A_1$ einen in 2-Stellung gebundenen 3,4-Phthaloylacridonylrest oder einen gegebenenfalls substituierten in 1- oder 2-Stellung gebundenen Anthrachinonylrest
und
$Q_1$ den Rest einer Benzol-, Thiophen- oder Pyridindicarbonsäure oder einen 1,3,5-Triazinrest, der unsubstituiert oder durch Halogen, Niederalkyl, Niederalkoxy, Niederalkylthio, Aryl, Aryloxy, Pyridyl, Amino, Niederalkylamino, Diniederalkylamino, Hydroxyniederalkylamino, Di-(hydroxyniederalkyl)-amino oder Arylamino substituiert ist,
bedeuten, wobei der Ausdruck "Nieder" sich auf solche Gruppen mit 1 bis 5 Kohlenstoffatomen bezieht.

9. Anthrachinonküpenfarbstoffe gemäss Anspruch 8, dadurch gekennzeichnet, dass in Formel (2) $Q_1$ einen zweiwertigen, unsubstituierten oder durch Halogen, Niederalkyl, Niederalkylthio, Diniederalkylamino, Di-(hydroxyniederalkyl-)amino, Phenyl, Phenylamino oder Pyridyl substituierten 1,3,5-Triazinrest und
$A_1$ einen 1-Anthrachinonylrest, der eine Thiophen-2-carbonsäureamidgruppe enthält,
bedeuten.

10. Verfahren zur Herstellung von Anthrachinonküpenfarbstoffen der in Anspruch 1 angegebenen Formel (1), dadurch gekennzeichnet, dass man (A) eine gegebenenfalls ringsubstituierte 2,4-Diamino-1,3,5-triazinverbindung oder ein Dicarbonsäurediamid der Formel
(3) $Q'(-CONH_2)_2$
mit einer 1-Halogenanthrachinonverbindung, welche eine Thiophen-2-carbonsäureamidgruppe enthält, und einer verküpbaren Halogenverbindung der Formel (4) A-Hal umsetzt, oder dass man (B) eine

gegebenenfalls ringsubstituierte 2,4-Dihalogen-1,3,5-triazinverbindung oder ein Dicarbonsäuredihalogenid der Formel

(5) Q'–(COHal)$_2$

mit einer 1-Aminoanthrachinonverbindung, welche eine Thiophen-2-carbonsäureamidgruppe enthält, und einer verküpbaren Aminoverbindung der Formel (6) A–$NH_2$ kondensiert, worin Q' einen zweiwertigen aromatischen, carbocyclischen oder heterocyclischen Rest, Hal ein Halogenatom und A einen verküpbaren Rest bedeuten.

11. Verwendung der Anthrachinonküpenfarbstoffe gemäss Anspruch 1 zum Färben oder Bedrucken von Textilfasern aus natürlicher oder regenerierter Cellulose.

## Revendications

1. Colorants de cuve anthraquinoniques de formule

(1) 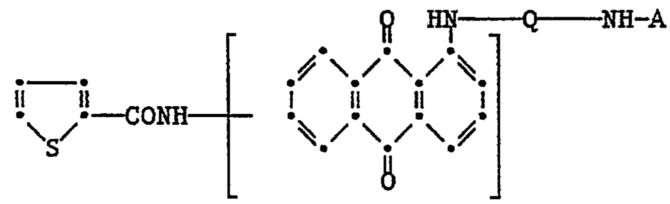

dans laquelle A représente un radical cuvable et

Q représente un radical 1,3,5-triazinyle ou le reste d'un acide dicarboxylique aromatique, carbocyclique ou hétérocyclique.

2. Colorants de cuve anthraquinoniques selon la revendication 1, caractérisés en ce que, dans la formule (1), le groupe thiophène-2-carboxamido se trouve en position 4 ou 5 du radical anthraquinonyle.

3. Colorants de cuve anthraquinoniques selon l'une des revendications 1 et 2, caractérisés en ce que, dans la formule (1), le radical cuvable A dérive d'un composé quinonique polycyclique.

4. Colorants de cuve anthraquinoniques selon l'une des revendications 1 à 3, caractérisés en ce que, dans la formule (1), le radical A représente un radical 3,4-phtaloylacridonyle lié en position 2 ou un radical anthraquinonyle lié en position 1 ou 2.

5. Colorants de cuve anthraquinoniques selon l'une des revendications 1 à 4, caractérisés en ce que, dans la formule (1), Q représente le reste bivalent d'un acide dicarboxylique aromatique mono- ou bicyclique, ayant de 8 à 16 atomes de carbone.

6. Colorants de cuve anthraquinoniques selon l'une des revendications 1 à 4, caractérisés en ce que, dans la formule (1), Q représente le radical bivalent d'un acide dicarboxylique d'un hétérocycle à 5 ou 6 chaînons, à caractère aromatique.

7. Colorants de cuve anthraquinoniques selon l'une des revendications 1 à 4, caractérisés en ce que, dans la formule (1), Q représente un radical 1,3,5-triazine bivalent non substitué ou substitué par un halogène ou par un groupe alkyle inférieur, alcoxy inférieur, alkylthio inférieur, aryle, aryloxy, pyridyle, amino, alkylamino inférieur, di(alkyl inférieur)-amino, hydroxyalkylamino inférieur, di-(hydroxyalkyl inférieur)-amino ou arylamino, l'expression "inférieur" se rapportant à de tels groupes ayant de 1 à 5 atomes de carbone.

8. Colorants de cuve anthraquinoniques selon la revendication 1, caractérisés en ce qu'ils correspondent à la formule

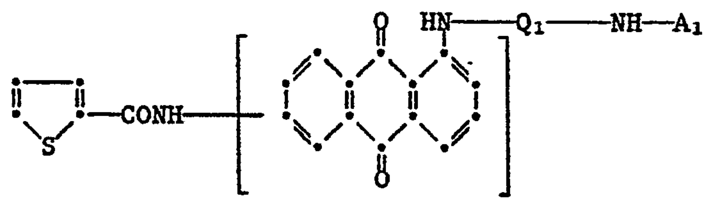 (2)

dans laquelle

$A_1$ représente un radical 3,4-phtaloylacridonyle lié en position 2 ou un radical anthraquinonyle éventuellement substitué, lié en position 1 ou 2, et

$Q_1$ représente le reste d'un acide benzène-, thiophène- ou pyridinedicarboxylique ou un radical 1,3,5-triazine qui n'est pas substitué ou qui est substitué par un halogène ou par un groupe alkyle inférieur, alcoxy inférieur, alkylthio inférieur, aryle, aryloxy, pyridyle, amino, alkylamino inférieur, di(alkyl inférieur)-amino, hydroxyalkyl(inférieur)-amino, di-(hydroxyalkyl inférieur)-amino ou arylamino, l'expression

"inférieur" se rapportant à de tels groupes ayant de 1 à 5 atomes de carbone.

9. Colorants de cuve anthraquinoniques selon la revendication B, caractérisés en ce que, dans la formule (2), $Q_1$ représente un reste 1,3,5-triazine bivalent non substitué ou substitué par un halogène ou par un groupe alkyle inférieur, alkylthio inférieur, di(alkyl inférieur)amino, di-(hydroxyalkyl inférieur)-amino, phényle, phénylamino ou pyridyle, et $A_1$ représente un radical 1-anthraquinonyle qui contient un groupe thiophène-2 carboxamido

10. Procédé pour la préparation de colorants de cuve anthraquinoniques de formule (1) indiquée dans la revendication 1, caractérisé en ce que (A) on fait réagir un composé 2,4-diamino-1,3,5-triazine éventuellement substitué au noyau ou un diamide d'acide dicarboxylique de formule

$Q'(-CONH_2)_2$ (3)

avec un composé 1-halogéno-anthraquinonique qui contient un groupe thiophène-2-carboxamido, et avec un composé halogéné cuvable de formule A-Hal (4), ou en ce que (B) on condense un composé 2,4-dihalogéno-1,3,5-triazine éventuellement substitué au noyau, ou un dihalogénure d'acide dicarboxylique de formule

$Q'-(COHal)_2$ (5)

avec un composé 1-aminoanthraquinonique qui contient un groupe thiophène-2-carboxamido et avec un composé aminé cuvable de formule $A-NH_2$ (6), Q' représentant un radical bivalent aromatique, carbocyclique ou hétérocyclique, Hal représentant un atome d'halogène et A représentant un radical cuvable.

11. Utilisation des colorants de cuve anthraquinoniques selon la revendication 1, pour la teinture ou l'impression de fibres textiles à base de cellulose naturelle ou régénérée.

**Claims**

1. An anthraquinone vat dye of the formula

(1) 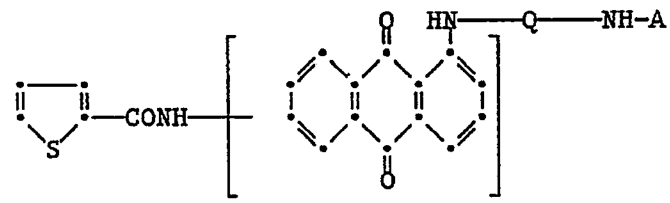

in which A is a vattable radical and Q is a 1,3,5-triazinyl radical or the radical of an aromatic, carbocyclic or heterocyclic dicarboxylic acid.

2. An anthraquinone vat dye according to claim 1, wherein the thiophene-2-carboxilide group in the formula (1) is located in the 4-position or 5-position of the anthraquinonyl radical.

3. An anthraquinone vat dye according to any one of claims 1 and 2, wherein the vattable radical A in the formula (1) is derived from a polycyclic quinonoid compound.

4. An anthraquinone vat dye according to any one of claims 1 to 3, wherein the radical A in the formula (1) is a 3,4-phthaloylacridonyl radical which is attached in the 2-position or is an anthraquinonyl radical which is attached in the 1-position or 2-position.

5. An anthraquinone vat dye according to any one of claims 1 to 4, wherein Q in the formula (1) is the divalent radical of a monocyclic or dicyclic aromatic dicarboxylic acid having 8 to 16 carbon atoms.

6. An anthraquinone vat dye according to any one of claims 1 to 4, wherein Q in the formula (1) is the divalent radical of a dicarboxylic acid of a 5-membered or 6-membered heterocyclic structure of aromatic character.

7. An anthraquinone vat dye according to any one of claims 1 to 4, wherein Q in the formula (1) is a divalent 1,3,5-triazine radical which is unsubstituted or is substituted by halogen, lower alkyl, lower alkoxy, lower alkylthio, aryl, aryloxy, pyridyl, amino, lower alkylamino, di-lower alkylamino, hydroxy-lower alkylamino, di-(hydroxylower alkyl)amino or arylamino, the term "lower" referring to those groups having 1 to 5 carbon atoms.

8. An anthraquinone vat dye according to claim 1, which has the formula

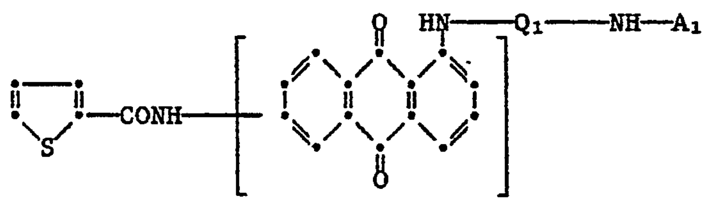 (2)

in which $A_1$ is a 3,4-phthaloylacridonyl radical attached in the 2-position or a substituted or unsubstituted anthraquinonyl radical which is attached in the 1-position or 2-position, and $Q_1$ is the radical of a benzenedicarboxylic, thiophenedicarboxylic or pyridinedicarboxylic acid or is a 1,3,5-triazine radical which is unsubstituted or is substituted by halogen, lower alkyl, lower alkoxy, lower alkylthio, aryl, aryloxy, pyridyl, amino, lower alkylamino, di-lower alkylamino, hydroxy-lower alkylamino, di-(hydroxy-lower alkyl)amino or arylamino, the term "lower" referring to those groups having 1 to 5 carbon atoms.

9. An anthraquinone vat dye according to claim 8, wherein $Q_1$ in the formula (2) is a divalent 1,3,5-triazine radical which is unsubstituted or is substituted by halogen, lower alkyl, lower alkylthio, di-lower alkylamino, di-(hydroxy-lower alkyl)amino, phenyl, phenylamino or pyridyl, and $A_1$ is a 1-anthraquinonyl radical containing a thiophene-2-carboxamide group.

10. A process for the preparation of an anthraquinone vat dye of the formula (1) indicated in claim 1, which comprises (A) reacting a 2,4-diamino-1,3,5-triazine compound which is unsubstituted or is substituted in the ring or a dicarboxamide of the formula

(3) $Q'(-CONH_2)_2$

with a 1-halogenoanthraquinone compound containing a thiophene-2-carboxamide group and with a vattable halogen compound of the formula (4) A–Hal, or (B) subjecting a 2,4-dihalogeno-1,3,5-triazine compound which is unsubstituted or is substituted in the ring or a dicarboxylic acid dihalide of the formula

(5) $Q'-(COHal)_2$

to a condensation reaction with a 1-aminoanthraquinone compound containing a thiophene-2-carboxamide group and with a vattable amino compound of the formula (6) $A-NH_2$, Q′ being a divalent aromatic, carbocyclic or heterocyclic radical, Hal being a halogen atom and A being a vattable radical.

11. The use of an anthraquinone vat dye according to claim 1 for dyeing or printing textile fibres composed of natural or regenerated cellulose.